# EUROPÄISCHE PATENTANMELDUNG

(11) **EP 2 559 678 A1**
(43) Veröffentlichungstag der Anmeldung: **20.02.2013**
(21) Anmeldenummer: 11177668.8
(22) Anmeldetag: 16.08.2011
(51) Int. Cl.: C04B 35/505, C04B 33/02, C04B 35/12, F23R 3/00, C04B 33/28

(54) **Druckgußschlicker und daraus hergestellte Feuerfestkeramik für Gasturbinenanlagen**

(71) Anmelder: SIEMENS AKTIENGESELLSCHAFT, 80333 München (DE)
(72) Erfinder: Die Erfindernennung liegt noch nicht vor

(57) **Zusammenfassung**

Die Erfindung betrifft einen Druckgußschlicker zur Herstellung einer Feuerfestkeramik für den Einsatz als Hitzeschild im Heißgaspfad von Gasturbinenanlagen, umfassend ein körniges Gemenge aus zumindest zwei Werkstoffen mit unterschiedlichen Wärmeausdehnungskoeffizienten, sowie organische und/oder anorganische Binde- und Stellmittel, wobei das körnige Gemenge eine multimodale Korngrößenverteilung aufweist, wobei die multimodale Korngrößenverteilung sich aufteilt auf 10-20 Gewichtsprozent Grobkorn im Größenbereich von 1-5 mm Durchmesser, 10-20 Gewichtsprozent Mittelkorn im Größenbereich von 0,5-1 mm Durchmesser, und 60-80 Gewichtsprozent Feinkorn im Größenbereich bis 0,5 mm Durchmesser, und wobei die Gewichtsaufteilung anteilig so gewählt ist, dass sie zusammen 100 Gewichtsprozent des körnigen Gemenges ergeben.

## Beschreibung

Die Erfindung betrifft einen Druckgußschlicker zur Herstellung einer Feuerfestkeramik für den Einsatz als Hitzeschild im Heißgaspfad von Gasturbinenanlagen gemäß dem Oberbegriff des Anspruchs 1, sowie eine Feuerfestkeramik für den Einsatz als Hitzeschild im Heißgaspfad von Gasturbinenanlagen gemäß dem Oberbegriff des Anspruchs 7.

Gasturbinenanlagen bestehen im Wesentlichen aus einem Verdichter, einem Brenner und einer Gasturbine. Im Verdichter wird angesaugte Luft verdichtet, bevor sie im nachgeschalteten und im Verdichterplenum angeordneten Brenner in einer Brennkammer mit Brennstoff gemischt und dieses Gemisch verbrannt wird. Die der Brennkammer nachgeschaltete Gasturbine entzieht dann den entstandenen Verbrennungsabgasen thermische Energie und wandelt diese in mechanische Energie um. Ein mit der Gasturbine verbundener Generator wandelt diese mechanische Energie zur Stromerzeugung noch in elektrische Energie um.

Heute müssen Gasturbinenanlagen, wie andere, Strom erzeugende Anlagen auch, in allen Lastbereichen möglichst geringe Schadstoffemissionen bei maximalem Wirkungsgrad aufweisen. Die Höhe der Verbrennungstemperatur ist dabei durch gesetzliche vorgeschriebene NOx-Werte begrenzt. Die Temperatur in der Brennkammer, die den Heißgaspfad zwischen Brenner und Gasturbine bildet, liegt dabei typischerweise in der Größenordnung von ca. 1300 bis 1500 Grad Celsius. Um diesen hohen Temperaturen stand halten zu können, müssen zum Schutz der den Heißgaspfad umschließenden Bauteile und Tragstrukturen deshalb entsprechende Brennkammerauskleidungen gegen einen solchen Heißgasangriff vorgesehen werden.

Solche Hitzeschilde können dabei sowohl metallisch als auch keramisch ausgeführt werden. Bei Gasturbinenanlagen werden aufgrund der aggressiven Heißgase keramische Materialien bevorzugt. Im Vergleich zu metallischen Materialen haben solche Feuerfestkeramiken eine höhere Temperatur- und Korrosionsbeständigkeit, sowie eine niedrigere Wärmeleitfähigkeit. Werkstoffbasis für solche keramische Hitzeschilde sind hochkorundhaltige Feuerfestkeramiken, die beispielsweise nach dem in der DE 10 2008 011 820 A1 beschriebenen Druckgußschlickergießverfahren hergestellt werden.

Gasturbinenanlagen müssen heute in kürzester Zeit an die jeweiligen Lastbedingungen angepasst werden können. Höchste Belastungen für die Bauteile und Tragstrukturen der Gasturbinenanlage, also auch der Hitzeschilde, entstehen dabei beim schnellen Abschalten von Grundlast. Hierbei kann die Heißgastemperatur in kürzester Zeit in der Größenordnung von bis zu 1000 Kelvin fallen. Der dadurch in den Hitzeschildern induzierte Thermoschock erfordert für die Feuerfestkeramik Werkstoffeigenschaften, die eine hohe Festigkeit bei gleichzeitiger hoher Wärmeleitfähigkeit und das bei Temperaturen von bis zu ca. 1500 Grad Celsius und mehr ermöglichen. Zudem müssen die Feuerfestkeramiken einen hohen Widerstand gegen Rissbildung aufweisen. Aus der EP 1 327 108 A1 sind Feuerfestkeramiken bekannt, die die zuvor genannten Eigenschaften erfüllen, wobei dazu die Feuerfestkeramik auf der besonders beanspruchten Heißgasseite im Mittel eine andere Korngrößenverteilung als auf der gegenüberliegenden kälteren Brennkammerwandseite aufweist. Eine solche Korngrößenverteilung hat aber den Nachteil, dass an den Grenzflächen der unterschiedlichen Porengrößeverteilungen zusätzliche innere Spannungen induziert werden können, was sich negativ auf die passive Sicherheit der Hitzeschilde auswirken kann. Keramiken mit optimierter homogener Korngrößenverteilung wirken positiv auf die passive Sicherheit des Gesamtsystems ein.

Aufgabe der Erfindung ist es, einen Druckgußschlicker sowie eine daraus hergestellte Feuerfestkeramik bereit zu stellen, der eine große Thermoschockbeständigkeit aufweist und daher besonders gut für den Einsatz als Hitzeschild im Heißgaspfad von Gasturbinen geeignet ist.

Diese Aufgabe wird mit dem Druckgußschlicker mit den Merkmalen des Anspruchs 1 gelöst.

Dadurch, dass der Druckgußschlicker ein körniges Gemenge aus zumindest zwei Werkstoffen mit unterschiedlichen Wärmeausdehnungskoeffizienten, sowie organische und/oder anorganische Binde- und Stellmittel umfasst, wobei die multimodale Korngrößenverteilung des Gemenges aufteilt wird auf 10-20 Gewichtsprozent Grobkorn im Größenbereich von 1-5 mm Durchmesser, 10-20 Gewichtsprozent Mittelkorn im Größenbereich von 0,5-1 mm Durchmesser, und 60-80 Gewichtsprozent Feinkorn im Größenbereich bis 0,5 mm Durchmesser, wobei die Gewichtsaufteilung anteilig so gewählt werden muss, dass sich zusammen 100 Gewichtsprozent des körnigen Gemenges ergeben, ergibt sich eine für den Einsatz in Gasturbinenanlagen besonders bevorzugte Gesamtporosität der daraus erzeugten Feuerfestkeramik mit einer besonders hohen Thermoschockbeständigkeit. Solche erfindungsgemäß hergestellte Feuerfestkeramiken weisen damit ein Werkstoffverhalten auf, die den beim schnellen Abschalten oder auch generell beim An- und Abfahren der Gasturbinenanlage entstehenden schnellen thermischen Zyklen sicher standhalten können.

Vorzugsweise besteht dabei der Mittelkornanteil selbst zu mindestens 20 Gewichtsprozent aus dem Werkstoff mit dem kleineren Wärmeausdehnungskoeffizienten. Dies bewirkt, dass im Gefüge während des Brennens des Druckgußschlicker innere Spannungen entstehen, die zu einer Steigerung der Festigkeit der daraus hergestellten Feuerfestkeramik und damit zu einer Verbesserung des Thermoschockverhaltens des Hitzeschildes führen.

Bevorzugt wird als Binde- und Stellmittel Xanthan, insbesondere Xanthan in einer Konzentration von maximal 0,05 Gewichtsprozent vom Druckgußschlicker, vorgesehen. Der Einsatz von Xanthan führt zu einer Stabilisierung der multimodalen Korngrößenverteilung im Druckgußschlicker. Diese Stabilität ist notwendig, um die angestrebte gleichmäßige Porengrößenverteilung und damit einen homogene Porosität über die gesamte daraus hergestellte Feuerfestkeramik, insbesondere bei komplexen Hitzeschildgeometrien, zu erzielen.

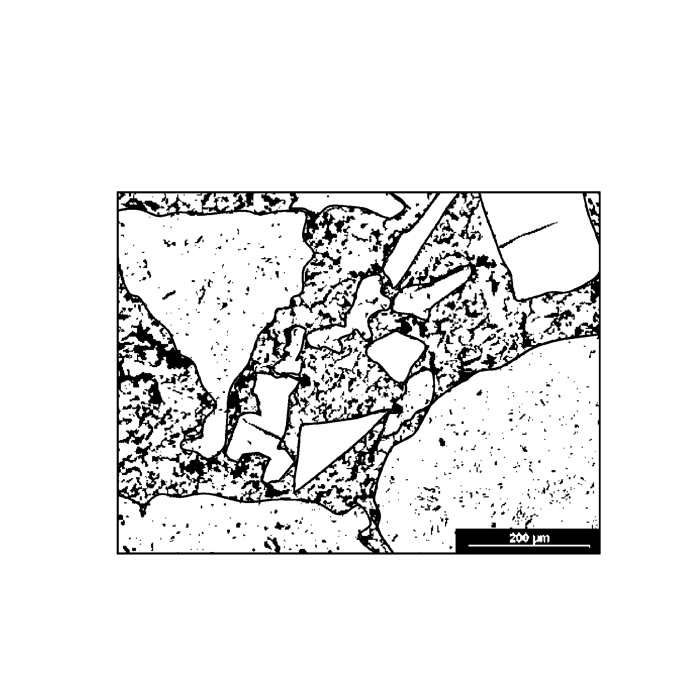

Die Figur zeigt schematisch eine Elektronenrastermikroskopaufnahme eines beispielhaften Schnitts durch eine erfindungsgemäß hergestellte Feuerfestkeramik, die als Hitzeschildkeramik für den Einsatz in Gasturbinenanlagen ausgelegt ist. Im Schnittbild schematisch angedeutet ist die gleichmäßige Verteilung der groben, mittleren und feinen Körner, die sich homogen durch die gesamte Feuerfestkeramik zieht und so eine gezielte nahezu gleichmäßig verteilte Porosität von ca. 18-20% über die gesamte Keramik bewirkt.

Die Einstellung einer möglichst gleichmäßigen Porosität wird dabei nicht unerheblich durch das verwendete Bindemittel beeinflusst. Wird als Bindemittel ein silikatisches Bindemittel oder eine Kombination silikatischer Bindemittel vorgesehen, kann ein besonders gut modulierbarer Druckgußschlicker erreicht werden. In Abgrenzung zu den aus den DE 10 2008 011 820 A1 bekannten zementhaltigen, phosphathaltigen, aluminiumhydroxidhaltigen Bindemitteln bindet ein silikatisches Bindemittel erst beim Sintern des Druckgußschlickers. Dazu wird dem fließ- und pumpfähigen Druckgußschlicker aus dem erfindungsgemäßen Korngemenge, bestehend aus Oxiden auf Basis Al₂O₃, MgO, MgAl₂O₄, CaO, ZrO₂, Cr₂O₃, CeO₂, Y₂O₃, TiO₂, Bauxit, Andalusit, Dolomit, Schammotte, Spinelle, Mullite und/oder Nicht-Oxide auf Basis SiC, C und/oder solche enthaltende Rohstoffe, mit einem wässrigen Dispergiermedium und dem Bindemittelsystem gemischt. Anschließend wird noch Kaolin oder Ton oder Bentonit oder Kombinationen dieser drei Silikaten als silikatisches Bindemittelsystem beigesetzt, bevor der Druckgußschlicker dann unter Druck in eine Flüssigkeit aufnehmende oder für Flüssigkeit durchlässige Gießform einer Druckgussanlage so eingebracht wird, dass das Formteil aus dem körnigen Gemenge auf einer innenseitigen Oberfläche eines Gießraums der Gießform durch Abführen von im Schlicker enthaltener Flüssigkeit durch die Gießform ausgebildet wird.

Wird alternativ als Bindemittel ein Bindemittelsystem aus zwei Polysacchariden vorgesehen ist, ergibt sich eine höhere Viskosität, die durch Entwässerung in der Gießform mittels Druck oder Unterdruck noch weiter erhöht wird, so dass eine Verfestigung des Druckgußschlickers in der Gießform generiert wird. Dabei kommen vorteilhafterweise Bindemittelsysteme aus Xanthan und Guarkernmehllösung, oder alternativ auf Basis Xanthan oder Johannisbrotkemmehl oder Carrageen oder Agar oder Traganth oder Karaya oder Gum Arabicum oder Tarakemmehl oder Konjak-Mannan oder Cassiagummi als das erste Polysaccharid mit einem zweiten Polysaccharid zum Einsatz. Es hat sich nämlich überraschenderweise gezeigt, dass solche Bindemittelsysteme eine stärkere Abhängigkeit der Viskosität vom Mischungsverhältnis Dispergiermedium/Polysaccharide aufweisen als ein in gleicher Menge einzeln in Wasser gemischtes Polysaccharid. Bereits eine geringe Verringerung des Wasseranteils der Mischung Wasser/Polysaccharide hat einen starken Anstieg der Viskosität des Bindemittels zur Folge. Erfindungsgemäß bewirkt der Einsatz eines solchen Bindemittelsystems durch die Entwässerung in der Gießform mittels Druck oder Unterdruck eine Viskositätserhöhung und Vernetzung des Bindemittels, so dass eine Verfestigung des Formteils in der Gießform generiert wird.

## Patentansprüche

1. Druckgußschlicker zur Herstellung einer Feuerfestkeramik für den Einsatz als Hitzeschild im Heißgaspfad von Gasturbinenanlagen, umfassend ein körniges Gemenge aus zumindest zwei Werkstoffen mit unterschiedlichen Wärmeausdehnungskoeffizienten, sowie organische und/oder anorganische Binde- und Stellmittel, wobei das körnige Gemenge eine multimodale Korngrößenverteilung aufweist,
**dadurch gekennzeichnet, dass** die multimodale Korngrößenverteilung sich aufteilt auf
- 10-20 Gewichtsprozent Grobkorn im Größenbereich von 1-5 mm Durchmesser,
- 10-20 Gewichtsprozent Mittelkorn im Größenbereich von 0,5-1 mm Durchmesser, und
- 60-80 Gewichtsprozent Feinkorn im Größenbereich bis 0,5 mm Durchmesser, und wobei
- die Gewichtsaufteilung anteilig so gewählt ist, dass sie zusammen 100 Gewichtsprozent des körnigen Gemenges ergeben.

2. Druckgußschlicker nach Anspruch 1,
**dadurch gekennzeichnet, dass** die Mittelkornanteil selbst zu mindestens 20 Gewichtsprozent aus dem Werkstoff mit dem kleineren Wärmeausdehnungskoeffizienten besteht.

3. Druckgußschlicker nach Anspruch 1 oder 2,
**dadurch gekennzeichnet, dass** als Binde- und Stellmittel Xanthan, insbesondere Xanthan in einer Konzentration von maximal 0,05 Gewichtsprozent vom Druckgussschlicker vorgesehen ist.

4. Druckgußschlicker nach Anspruch 1 oder 2,
**dadurch gekennzeichnet, dass** als Bindemittel ein Bindemittelsystem aus zwei Polysacchariden vorgesehen ist.

5. Druckgußschlicker nach Anspruch 4,
**dadurch gekennzeichnet, dass** das Bindemittelsystem aus Xanthan und Guarkernmehllösung besteht.

6. Druckgußschlicker nach Anspruch 1 oder 2,
**dadurch gekennzeichnet, dass** als Bindemittel ein silikatisches Bindemittel oder eine Kombination silikatischer Bindemittel vorgesehen ist.

7. Feuerfestkeramik für den Einsatz als Hitzeschild im Heißgaspfad von Gasturbinen, hergestellt aus dem Druckgußschlicker nach einem Ansprüche 1 bis 6 durch trocknen und brennen **dadurch gekennzeichnet, dass** die Feuerfestkeramik insgesamt eine Porosität von 18-20% aufweist.

8. Feuerfestkeramik nach Anspruch 7,
**dadurch gekennzeichnet, dass** vor dem Trocknen und Brennen die Korngrößen im Druckgußschlicker so verteilt sind, dass eine Feuerfestkeramik mit einer nahezu gleichmäßigen Porengrößenverteilung entsteht.
